# EUROPEAN PATENT APPLICATION

(11) **EP 4 778 394 A1**
(43) Date of publication of application: **22.07.2026**
(21) Application number: 25227348.7
(22) Date of filing: 29.12.2025
(51) Int. Cl.: A21C 15/00, A23G 7/00, B65G 57/32

(54) **METHOD AND SYSTEM FOR FEEDING A PLURALITY OF BAKERY PRODUCTS**

(30) Priority: 16.01.2025 IT 202500000660
(71) Applicant: Soremartec S.A., 2633 Senningerberg (LU)
(72) Inventor: MOLLO, Marco, L-2633 Senningerberg (LU)
(74) Representative: Buzzi, Notaro & Antonielli d'Oulx S.p.A.

(57) **Abstract**

A method for feeding food products (100), in particular bakery products, along a production line is described.

The method comprises the steps of:
- in at least one accumulation line, accumulating the products (100) coming from a first operational station (200) of the production line, in the form of at least one longitudinal row (20') of products in mutual contact;
- in at least one accumulation column (40), accumulating the products coming from said accumulation line (20), in the form of at least one stack of products (40'), and
- transferring the products of said row of products (20') from said accumulation line (20) to said accumulation column (40), via a singulating device to determine a discontinuity between said row of products (20'), contained in said accumulation line (20), and said stack of products (40'), contained in said accumulation column (40).

## Description

### Field of the invention

The present invention relates to a method for feeding a plurality of bakery products along a production line.

More particularly, the method described herein was devised for feeding bakery products exiting a baking station, to a downstream station for performing an operation on the products, such as depositing a filling.

Preferred applications of the method described herein relate to the production of biscuits.

Conventionally, a baking station is traversed by a conveyor belt on which the dough pieces, first, and the biscuits, later, are arranged close to each other, and according to a continuous distribution both along the feeding direction of the transport plane and along a direction transverse to the feeding direction.

The biscuits are released onto the conveyor belt according to this arrangement, directly from a forming drum used for forming the biscuit dough, and the arrangement in question in fact reproduces the mutual positioning of the mold cavities provided on the forming drum.

On the other hand, the operational stations of the production line provided downstream of the baking station are generally served by a conveyor that feeds the biscuits to these stations according to a succession of rows transverse to the feeding direction; the operational stations in question are in fact commonly configured precisely to operate on such a succession of rows of biscuits.

To connect together the conveyor belt that feeds the dough pieces to the baking station, and the conveyor that feeds the biscuits to the downstream operational stations, biscuit feeding systems are generally provided, configured to perform two functions: i) creating an accumulation of biscuits with the biscuits exiting the baking station, and ii) dispensing in a controlled manner the biscuits from said accumulation, to feed said succession of transverse rows of biscuits, to the one or more downstream operational stations.

The accumulation of biscuits is achieved by means of a plurality of longitudinal accumulation lines, which are parallel to each other and extend for several meters, predominantly in a horizontal direction.

Inside these accumulation lines, longitudinal rows of biscuits are accumulated which extend along the entire length of the same accumulation lines and which are formed by biscuits in mutual contact.

During operation, the biscuits in these rows assume a variable position between two end positions, more precisely an upright position (in which the single biscuit is oriented vertically or is located - with its main plane of extension - on a vertical resting plane), and a position completely lying on an adjacent biscuit, this depending on the difference between the feeding speed of the dough pieces to the baking station and the feeding speed of the biscuits to the downstream operational stations.

Said longitudinal accumulation lines terminate with respective accumulation columns which extend, instead, on vertical planes, and contain stacks of biscuits constituting the extension of said longitudinal rows of biscuits, without any interruption.

The feeding of biscuits to the downstream operational stations occurs through the extraction of biscuits from the bottom of these biscuit stacks, where they lie on horizontal resting planes.

It is noted that the height of the accumulation columns and the respective biscuit stacks contained inside them commonly exceeds one and a half meters and sometimes 2 meters, and therefore, to prevent the biscuits positioned lower down from being damaged under the pressure exerted by the overlying biscuits, the accumulation columns are not perfectly vertical, but instead follow a curvilinear path (for example, they may have an S-shaped profile or a circular arc profile with large radii of curvature), so that most of the weight of the biscuits is discharged onto the walls of the accumulation columns and not onto the biscuits themselves.

However, the feeding systems of the prior art suffer from a series of drawbacks.

Firstly, the loading of said accumulation columns cannot be carried out automatically, but instead requires the intervention of an operator who deposits the first biscuits manually, in order to avoid that, when the accumulation columns are still empty or partially empty, the biscuits end up in free fall for significant sections of the accumulation columns, with the risk of being damaged or not stacking correctly.

Secondly, in the feeding systems of the prior art, the rejection of defective biscuits is very difficult.

Usually, it is performed at the accumulation columns, and requires preliminary at least partial disassembly of the accumulation columns to access the biscuit stacks (obviously, after stopping the operation of the line), and then involves the complete removal of the biscuit stacks, with the consequence that the quantity of scrap generated is always significantly greater than the quantity of actually defective biscuits.

In this context, the present invention aims to achieve a solution for feeding biscuits capable of overcoming the aforementioned drawbacks.

In general, the present invention relates to a feeding method according to claim 1. Furthermore, the present invention relates to a feeding system according to claim 11.

The claims form an integral part of the teachings provided herein.

Further characteristics and advantages of the present invention will be apparent from the following description with reference to the accompanying drawings, provided by way of non-limiting example only, in which:
- figure 1 schematically represents a preferred embodiment example of the method described herein and the related feeding system;
- figure 2 represents a side view of a detail of the system of figure 1;

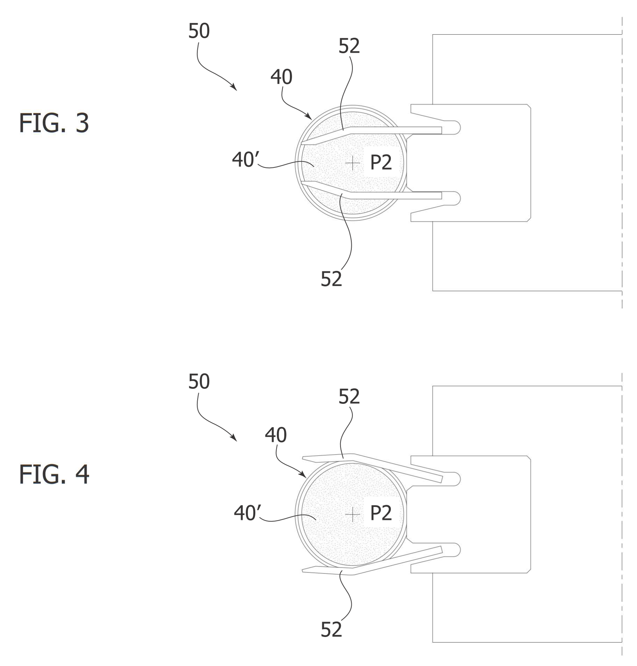

- figure 3 represents a bottom view of a detail of the feeding system of figure 1;
- figure 4 represents the same detail of figure 3 in a second operating condition of the feeding system.

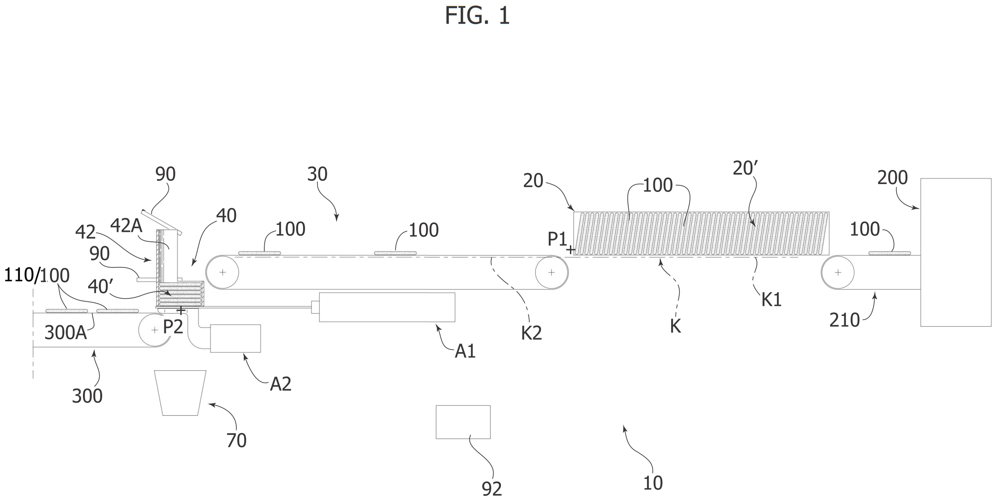

With reference to figure 1, this represents a partial view of a biscuit production line comprising a baking station 200 served by a conveyor belt 210, which transports biscuits 100 to the exit of the baking station 200, a conveyor 300 arranged to feed the biscuits 100 to an operational station downstream of the baking station (not illustrated), and a feeding system 10 made according to a preferred embodiment of the invention, which is interposed between the conveyor belt 210 and the conveyor 300.

In a per se known manner, on the conveyor belt 210 the biscuits 100 can be arranged close to each other and according to a continuous distribution both along the feeding direction of the conveyor belt and along a direction transverse to the feeding direction.

The feeding system 10 is configured to create an accumulation of biscuits with the biscuits 100 received from the conveyor belt 210 and to feed to the conveyor 300 a succession of rows 110 of biscuits transverse to the feeding direction of the biscuits of the same conveyor 300.

Said operational station (not illustrated) can, for example, be a dosing station for a filling to create a layer of filling on the respective upper surfaces of the biscuits 100.

It is anticipated that a structure of the system 10 will be described below which can be replicated a variable number of times, depending on the needs of specific applications, as will be described in greater detail later.

In one or more preferred embodiments, like the one illustrated, the feeding system 10 comprises an accumulation line 20, which extends along a section K1 of a feeding path K of the biscuit production line. Preferably, the section K1 is horizontal or in any case is inclined at an angle not greater than 5° relative to a horizontal direction.

The accumulation line 20 is configured to receive the biscuits 100 from the conveyor belt 210 and to accumulate inside it a row 20' of biscuits in mutual contact, which occupies the accumulation line 20 for its entire extent.

At the same time, the accumulation line 20 is configured to advance the biscuits of the row 20' along the entire section K1, up to an end position P1.

The accumulation line 20 can be made according to known methods. For example, the accumulation line 20 can comprise a channel formed by a bottom and by two opposing side walls, which develops longitudinally along the section K1. The bottom of the channel can be provided with transport means configured to advance the biscuits along the line 20; the side walls of the channel act as a guide to guide the advancing movement of the biscuits.

Preferably, the accumulation line 20 is configured to advance the biscuits of the row 20' at a variable speed depending on the difference in flow rate between the flow of biscuits fed by the conveyor belt 210 and the flow of biscuits fed by the conveyor 300.

Furthermore, depending on said difference in flow rate, the biscuits 100 contained therein will then assume a variable position between two end positions, namely an upright position (in which the single biscuit is located - with its main plane of extension - on a vertical resting plane) and a position completely lying on an adjacent biscuit.

The person skilled in the art will understand that, when the difference in flow rate between the flow of biscuits fed by the conveyor belt 210 and the flow of biscuits fed by the conveyor 300 is maximum, the biscuits assume the upright position, while as this difference in flow rate reduces, they tend towards the lying position, until assuming said position when the difference in flow rate is zero.

In one or more preferred embodiments, like the one illustrated, the feeding system 10 further comprises an accumulation column 40, preferably vertical, which is configured to accumulate a stack 40' of biscuits.

Preferably, the biscuits of the stack 40' lie one on top of the other and are all arranged horizontally; in particular, each biscuit is in contact, via its respective upper side, with the lower side of a biscuit of the stack placed above, and via its respective lower side, with the upper side of a biscuit of the stack placed below (except for the last biscuit of the stack, which, with its lower side, is instead in contact with rejection means of the system 10, as will be described in detail later).

The accumulation column 40 is, furthermore, configured to guide a descending movement of the biscuits 100 along the same accumulation column 40, up to an extraction position P2, from which the last biscuit of the stack 40' is extracted - as will be described in more detail later - to be transferred onto the conveyor 300.

Preferably, the extraction position P2 is located immediately below the accumulation column 40.

In one or more preferred embodiments, the accumulation column 40 can comprise a vertical channel formed by a lateral wall 44 configured to surround the biscuit stack 40' and to guide the biscuits 100 in said descending movement.

In one or more preferred embodiments, like the one illustrated, the feeding system 10 further comprises a conveyor belt 30, which extends along a section K2 of the feeding path K, immediately following the section K1, connecting the accumulation line 20 to the accumulation column 40.

Preferably, the section K2 is horizontal.

Preferably, the transport plane 30A of the conveyor belt 30 is located substantially at the same height as the support plane of the biscuits in the accumulation line 20 (i.e., with reference to the channel mentioned above, at the same height as the bottom of said channel) .

The conveyor belt 30 is configured to transfer the biscuits 100 that reach one after the other the end position P1 of the accumulation line 20, to the accumulation column 40, according to a transfer phase in which the single biscuit 100 is separated from the row of biscuits 20' of the accumulation line 20 and is then transferred individually to the accumulation column 40, so as to determine a discontinuity between the row of biscuits 20', contained in the accumulation line 20, and the stack of biscuits 40', contained in the accumulation column 40.

Preferably, the conveyor belt 30 is configured to advance the biscuits 100 along the section K2 at a speed higher than the speed of advancement of the biscuits along the section K1 by the accumulation line 20.

In this way, the conveyor belt 30 can easily separate the single biscuits 100 from the row of biscuits 20'.

Furthermore, preferably, the advancement speed of the biscuits 100 on the conveyor belt 30 is such that, when they reach the downstream end of the belt, they are literally launched from the belt 30 into the accumulation column 40.

In one or more preferred embodiments, like the one illustrated, the accumulation column 40 comprises an upper inlet section 42, which is open on the side facing towards the conveyor belt 30, and which comprises, on the opposite side, a wall 42A configured to intercept the biscuits 100 launched by the conveyor belt 30, so that they fall into the accumulation column 40, depositing onto the biscuit stack 40'.

In view of the above, it appears clear that the conveyor belt 30 operates, more generally, as a singulating device for transferring the biscuits 100 individually, from the row of biscuits 20' to the accumulation column 40, so as to determine a discontinuity between the same row of biscuits 20', contained in the accumulation line 20, and the stack of biscuits 40', contained in the accumulation column 40

In alternative embodiments, other types of singulating devices can be provided instead of the conveyor belt 30.

For example, instead of the conveyor belt 30, a *pick-and-place* type robotic arm can be provided, which picks up the biscuits 100 individually from the row 20' and deposits them inside the accumulation column 40. In this case, the accumulation column 40 can be devoid of the inlet section 42 illustrated above.

In one or more preferred embodiments, like the one illustrated, the feeding system 10 further comprises an extraction device 60 configured to extract, one after the other, the biscuits 100 that reach the extraction position P2 at the bottom of the biscuit stack 40', transferring them individually onto the conveyor 300.

In one or more preferred embodiments, like the one illustrated, the extraction device 60 comprises an extraction member 62, which is positioned on a side of the accumulation column 40 opposite to where the conveyor 300 is located, and which is actuable by means of an actuator A1 to perform a pushing action on the biscuit 100 in the position P2, along a horizontal direction I, such as to transfer the biscuit 100 from the position P2 to above the transport plane 300A.

Preferably, the extraction member 62 is actuated according to an alternating rectilinear motion, so that, at each extraction cycle, it performs a forward movement to transfer the single biscuit 100 from the position P2 to the transport plane 300A of the conveyor 300, and a return movement to return to the original position beside the accumulation column 40 (according to a plan view).

In one or more preferred embodiments, like the one illustrated, the extraction member 62 is, furthermore, configured to vertically retain the biscuit stack 40' inside the accumulation column 40, during its forward movement, and to release the same biscuit stack 40', during its return movement, allowing a new biscuit 10 to reach the extraction position P2.

Preferably, the extraction member 62 is formed by a blade having a predefined thickness in view of the purposes indicated above.

In one or more preferred embodiments, like the one illustrated, the feeding system 10 further comprises a rejection device 50, which is arranged at the extraction position P2 and is actuable to determine a rapid automatic emptying of the accumulation column 40, when necessary.

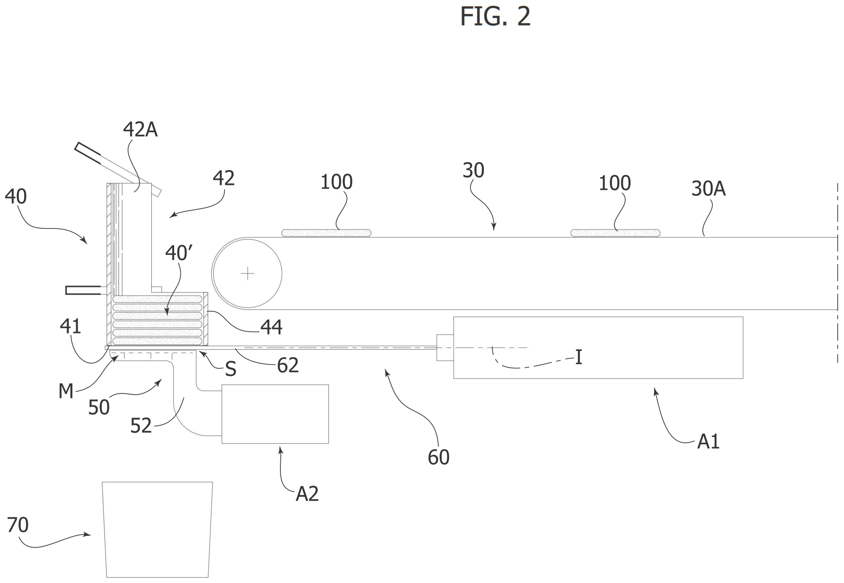

In one or more preferred embodiments, like the one illustrated, the rejection device 50 comprises a pair of retaining members 52 movable between a first operating position, in which the two retaining members 50 together define a support plane M on which the biscuit stack 40' contained in the accumulation column 40 rests, and a second operating position, in which the two retaining members 52 are located respectively on opposite sides of the accumulation column 40 (with reference to a plan view), thus releasing the biscuit stack 40' to an underlying scrap collection zone (visible in figure 2, where it is indicated with reference number 70). The two retaining members 52 are actuated by means of an actuator A2.

Therefore, when it is necessary to perform the rejection of the biscuits 100 contained in the accumulation column 40, it is sufficient to activate the rejection device 50 so that the two retaining members 52 are brought from the first operating position to the second operating position.

With reference to the preferred embodiment illustrated in the figures, it can be noted that the support plane M, defined by the two retaining members 52 in their first operating position, is vertically spaced from a lower edge 41 of the accumulation column 40, by a distance such that, between the accumulation column 40 and the support plane M, a space S is provided suitable for precisely receiving the biscuit 100 that is in the extraction position P2; the other biscuits of the stack 40', which rest on said biscuit 100, are instead contained inside the accumulation column 40.

Returning to the extraction device 60, its extraction member 62 moves above the two retaining members 52 and through the space S.

Preferably, during its forward and return movement to extract the biscuit 100 in the extraction position P2, the extraction member 62 passes close to the lower edge 41 of the accumulation column 40, thus performing the function described above of temporarily retaining the biscuit stack 40' inside the accumulation column 40, before releasing the biscuit stack 40' again to the two retaining members 52.

In the illustrated example, the two retaining members 52 are movable according to a reciprocal roto-translation movement in a horizontal plane, between a closed condition, corresponding to the first operating position, in which they are placed at a minimum mutual distance, and an open condition, corresponding to the second operating position, in which they are placed at a maximum mutual distance.

The configuration of the rejection device 50 and its mode of operation can however vary from those illustrated above; for example, in an alternative embodiment, the rejection device 50 can comprise a single retaining member, movable linearly on a horizontal plane.

In view of the above, it is noted how the configuration and the reciprocal arrangement of the two devices 50 and 60 is extremely advantageous, as it makes the system 10 capable of operating both the extraction of biscuits from the bottom of the stack 40' and an automatic rejection of the entire stack 40', when necessary, while maintaining a simple and reliable structure.

In one or more preferred embodiments, like the one illustrated, the system 10 can comprise one or more optical devices 90 (for example, a video camera) for capturing the biscuits 100 in order to identify any defects; preferably, the optical devices 90 are arranged so as to capture the biscuits 100 while they are moving in the air after being launched by the conveyor belt 30. In this way, the optical devices 90 can easily capture both opposite faces of the single biscuits 100.

Furthermore, a control unit 92 of the system can be configured to command the rejection device 50 based on quality data relating to the biscuits 100, obtained through the detections performed by the optical devices 90.

Returning to what was said previously, the feeding system 10 can reproduce the structure described above a variable number of times, depending on the needs of specific applications, so as to present a plurality of accumulation lines 20 and accumulation columns 40 which extend parallel to each other along the feeding path K. Between the accumulation lines 20 and the accumulation columns 40, an equal number of conveyor belts 30 or a single conveyor belt 30 can be provided, alternatively; the solution with a plurality of belts 30 is however preferable because it allows stopping only one of the lines, allowing the others to continue operating.

In view of the above, the biscuits 100 released from the conveyor belt 210 are therefore divided among the number of accumulation lines 20 provided in the feeding system 10.

The set of accumulation lines 40, and the extraction devices 60 associated with them, are then able, by simply synchronizing the extraction devices 60 so that they all act at the same instant, to transfer to the transport plane 300A of the conveyor 300, ordered rows of biscuits which comprise a number of biscuits equal to the number of accumulation lines, and which are transverse to the feeding direction of the transport plane 300A.

In one or more preferred embodiments, like the one illustrated, the accumulation column 40, and consequently the biscuit stack 40' contained therein, has a very reduced length compared to the accumulation columns found in prior art solutions.

Preferably, the length of the accumulation column 40 is less than 20 cm, even more preferably between 15 and 20 cm. Correspondingly, the length of the biscuit stack 40' is less than 10 cm, even more preferably between 5 and 10 cm.

Firstly, it is noted that this particular reduced-length configuration of the accumulation column 40 is made possible by the presence of the conveyor belt 30, which, as seen above, allows creating a break between the row of biscuits 20' and the stack of biscuits 40'.

In this way, the accumulation column 40 no longer has to also perform a connecting function with the accumulation line 20, and its extension can therefore be greatly reduced.

Moreover, this characteristic of the reduced length of the accumulation column 40 (and of the biscuit stack 40') provides several advantages.

Firstly, the weight of the stack 40' bearing on the biscuits themselves is considerably reduced; the accumulation column 40 can therefore be vertical, without the need to follow curved profiles of various kinds to discharge the weight of the biscuits onto the walls of the column, as occurs in prior art solutions.

Furthermore, the quantity of biscuits that is rejected each time the biscuit stack 40' is rejected through the activation of the rejection device 50 is greatly limited.

Finally, thanks to this characteristic of the reduced length of the accumulation column 40 and the presence of the conveyor belt 30, the feeding system 10 is able to perform a filling of the accumulation column 40 in a totally automatic manner; via the conveyor belt 30 the biscuits 100 can in fact be easily fed to the accumulation column 40, and can then be launched into it as described above, even when the column 40 is completely empty and without risks of breakage or misplacement of the biscuits, given that due to its limited length, the jump made by the biscuits before depositing onto the retaining members 52 always remains very limited.

## Claims

1. Method for feeding food products (100), in particular bakery products, along a production line, said method comprising the steps of:
- in at least one accumulation line (20) extending along a first section (K1) of a feeding path (K),
accumulating the products (100) coming from a first operational station (200) of the production line in the form of at least one longitudinal row (20') of products in mutual contact, extending along said first section (K1) of said feeding path (K), and
advancing the products (100) of said row of products (20') along said first section (K1), so as to keep said products in contact with each other and up to an end position (P1) of said accumulation line (20);
- in at least one accumulation column (40),
accumulating the products coming from said accumulation line (20) in the form of at least one stack of products (40'), and
causing the products of said stack (40') to descend along said accumulation column (40) so as to bring, one after the other, the products of said stack (40') to an extraction position (P2),
- extracting from said stack (40'), one after the other, the products of said stack (40') that individually reach said extraction position (P2), and transferring the extracted products (100) onto a conveyor (300) for feeding the products to a second operational station of the production line;
said method further comprising:
- via at least one singulating device (30), transferring the products of said row of products (20') from said accumulation line (20) to said accumulation column (40), according to a transfer phase in which the product (100) in said end position (P1) is separated from said row of products (20') and is then deposited individually inside said accumulation column (40), so as to determine a discontinuity between said row of products (20'), contained in said accumulation line (20), and said stack of products (40'), contained in said accumulation column (40).

2. Method according to claim 1, wherein said singulating device is a conveyor belt (30), which extends along a second section (K2) of said feeding path (K) and connects the accumulation line (20) to the accumulation column (40), and wherein said transfer phase includes advancing on said conveyor belt (30), along said second section (K2), each product (100) received by said conveyor belt (30) at said end position (P1), at a speed greater than the advancement speed of the products (100) of said row of products (20'), along said first section (K1).

3. Method according to claim 2, wherein said transfer phase further includes,
- launching via said conveyor belt (30), the product that reaches a downstream end of said conveyor belt (30), into said accumulation column (40), and
- intercepting the product launched by said conveyor belt (30) via a wall (42A) of an inlet section (42) of said accumulation column (40), so as to cause said launched product to fall into said accumulation column (40).

4. Method according to any one of the preceding claims, wherein said stack of products (40') has a predetermined length less than 10 cm, preferably between 5 cm and 10 cm, and wherein said method includes maintaining said stack of products (40') at said predetermined length or a lower measure.

5. Method according to any one of the preceding claims, comprising an automatic rejection phase in which the stack of products (40') contained in said at least one accumulation column (40) is discharged into an underlying collection zone, following the actuation of a rejection device (50).

6. Method according to claim 5, wherein said accumulation stack (40') is supported by a support plane (M) defined by at least one retaining member (52) of said rejection device (50), and wherein said automatic rejection phase includes moving said at least one retaining member (52) so as to release said stack of products (40') to said underlying accumulation zone.

7. Method according to any one of the preceding claims, wherein accumulating the products in said accumulation column (40) in the form of said stack (40') of products comprises a phase of forming said stack of products, in which, starting from a condition in which said accumulation column (40) is empty, via said at least one singulating device (30), one product after another is transferred from said accumulation line (20) to said accumulation column (40), while the phase of extracting the products is temporarily suspended until the formation of said stack of products (40') inside said accumulation column (40) is completed.

8. Method according to any one of the preceding claims, wherein said phase of extracting from said stack of products (40'), the products (100) of said stack (40') that reach, one after the other, said extraction position (P2), includes performing a pushing action on the single product (100) in said extraction position (P2) via an extraction member (62) of an extraction device (60), and simultaneously, during said extraction phase, via the same extraction member (62) temporarily supporting said stack of products (40').

9. Method according to claim 8, wherein said extraction member (62) is actuated according to an alternating rectilinear motion comprising a forward movement and a return movement.

10. Method according to any one of the preceding claims, wherein:
- said phase of accumulating the products (100) in the form of at least one longitudinal row (20') of products, includes accumulating a given number of longitudinal rows of products (20') parallel to each other, respectively in a number of accumulation lines (20) equal to said given number,
- said phase of accumulating the products (100) in the form of at least one stack of products (40'), includes accumulating a number of stacks of products (40') parallel to each other, equal to said given number, respectively in a number of accumulation columns (40) equal to said given number,
- via said at least one singulating device (30), transferring the products of said rows of products (20') that reach the end positions (P1) of said accumulation lines (20), from said accumulation lines (20) to said accumulation columns (40),
- extracting from said stacks of products (40'), the products in the extraction positions (P2) of said stacks of products (40'), in a synchronized manner to release onto said feeding conveyor, a succession of rows of products transverse to the feeding direction of said conveyor.

11. System for feeding food products, in particular bakery products, along a production line, via a method according to any one of the preceding claims,
said system comprising:
- at least one accumulation line (20), which extends along a first section (K1) of a feeding path (K) of said production line, and which is configured to accumulate the products coming from a first operational station of the production line, in the form of at least one row of products (20') in mutual contact, extending along said first section (K1) of said feeding path,
said accumulation line being, furthermore, configured to advance the products of said row of products (20') along said first section (K1), up to an end position (P1) of said accumulation line (20);
- at least one accumulation column (40), configured to accumulate the products coming from said accumulation line in the form of a stack of products (40') and to cause said products of said stack of products (40') to descend along said accumulation column (40), up to an extraction position (P2);
- at least one extraction device (60) configured to extract, one after the other, the products of said stack of products (40') that reach said extraction position (P2) and to transfer them onto a conveyor (300) for feeding the products to a second operational station of the production line.
said system further comprising:
- at least one singulating device (30) configured to transfer the products of said row of products (20') from said accumulation line (20) to said accumulation column (40), according to a transfer phase in which the product (100) in said end position (P1) is separated from said row of products (20') and is then deposited individually inside said accumulation column (40), so as to determine a discontinuity between said row of products (20'), contained in said accumulation line (20), and said stack of products (40'), contained in said accumulation column (40).

12. System according to claim 11, wherein said at least one singulating device is a conveyor belt (30) which extends along a second section (K2) of said feeding path (K) and connects the accumulation line (20) to the accumulation column (40), and wherein said conveyor belt (30) is configured to advance, along said second section (K2), each product (100) received by said conveyor belt (30) at said end position (P1), at a speed greater than the advancement speed of the products (100) of said row of products (20'), along said first section (K1).

13. System according to claim 12, wherein said conveyor belt (30) is configured to advance the products at a speed such that, when the products reach the downstream end of the conveyor belt (30), they are launched from said conveyor belt against said accumulation column (40), and wherein said accumulation column (40) comprises an upper inlet section (42) which is open towards said conveyor belt (30) and which comprises a stop wall (42A) configured to intercept the products launched by the conveyor belt (30), so that they deposit by gravity inside said accumulation column (40).

14. System according to any one of claims 11 to 13, comprising a rejection device (50) comprising at least one retaining member (52), which is movable between a first operating position, in which it defines a support plane (M) for supporting the stack of products (40') contained in the accumulation column (40), and a second operating position, in which the stack of products (40') is instead released to a collection zone underlying the accumulation column (40).

15. System according to claim 14, wherein said extraction device (60) comprises an extraction member (62) configured to perform a pushing action on the product of the stack of products (40') that is in said extraction position (P2), and which is movable above said retaining member (52) of said rejection device (50).

16. System according to claim 15, wherein said extraction member (62) is movable according to an alternating rectilinear motion comprising a forward movement and a return movement, said extraction member (62) being, furthermore, configured to temporarily support the stack of products (40') contained in said accumulation column (40), in place of said retaining member (52), during said forward movement, and to release said stack of products (40') again to said retaining member, during said return movement.
